# EUROPÄISCHE PATENTSCHRIFT

(11) **EP 0 193 036 B1**
(45) Veröffentlichungstag und Bekanntmachung des Hinweises auf die Patenterteilung: **05.01.1994**
(21) Anmeldenummer: 86101847.1
(22) Anmeldetag: 13.02.1986
(51) Int. Cl.: G02B 5/20, G01N 21/78, G01N 31/22, C09B 11/00

(54) **Verwendung eines optischen Filters mit reversibler Farbänderung**
Use of an optical filter with a reversible change of colour
Utilisation d'un filtre optique à changement de couleur réversible

(30) Priorität: 26.02.1985 DE 3506676
(43) Veröffentlichungstag der Anmeldung: 03.09.1986
(73) Patentinhaber: SIEMENS AKTIENGESELLSCHAFT, 80333 München (DE)
(72) Erfinder: Kimmel, Heinrich, Dr., D-8520 Buckenhof (DE); Montag, Bernhard, D-8550 Forchheim (DE); Gumbrecht, Walter, Dr., D-8520 Erlangen (DE)

(56) Entgegenhaltungen:
- EP-A- 0 193 037
- GB-A- 1 010 507
- US-A- 3 114 610
- US-A- 3 754 867
- US-A- 4 049 649
- US-A- 4 407 960
- PATENT ABSTRACTS OF JAPAN, Band 5, Nr. 81 (P-63)[753], Mai 1981; & JP-A-56 29 165
- PATENT ABSTRACTS OF JAPAN, Band 6, Nr. 175 (P-141)[1053], 9. September 1982; & JP-A-57 93 253

## Beschreibung

Die Erfindung betrifft die Verwendung eines optischen Filters zur kontinuierlichen Messung des Partialdruckes von Gasen und Dämpfen.

Zur Messung des Partialdruckes von Gasen und Dämpfen dienen beispielsweise Prüfröhrchen, wobei mittels bekannter Substanzen der relevante Gasanteil erfaßt wird. Dies stellt jedoch keine kontinuierlich arbeitende Bestimmungsmethode dar. Kontinuierliche Messungen sind mit einem Massenspektrometer möglich. Die mit dieser kostspieligen Vorrichtung erzielbaren Bestimmungsmöglichkeiten und Genauigkeiten sind aber vielfach nicht erforderlich. Die zur kontinuierlichen Messung des Partialdruckes von Gasen und Dämpfen ferner eingesetzten chemisch sensitiven Sensoren arbeiten mit aufgeheizten Wendeln oder Metalloxidschichten. Sensoren, die mit Feststoffelektrolyten oder mit Palladium-Gate-Feldeffekttransistoren arbeiten, gestatten lediglich die Messung von Sauerstoff und Wasserstoff.

Der Erfindung liegt die Aufgabe zugrunde, eine geeignete Maßnahme zum kontinuierlichen Messen der Partialdrucke/Konzentration von polaren Lösungsmitteln bei niedrigen Temperaturen zu ergreifen, die nicht mit den vorstehend geschilderten Nachteilen behaftet ist.

In einer bekannten Ausführungsform eines Gassensors wird die Strahlung einer Strahlungsquelle durch die reversible Farbänderung einer Sensorschicht geändert und dann photoelektrisch verarbeitet. Die Sensorschicht ändert ihren pH-Wert und muß somit Feuchtigkeit enthalten, und deshalb ist sie für Lösungsmitteldämpfe ungeeignet (US-Patentschrift 3 754 867).

Bei einem bekannten System zur visuellen Anzeige einer Sterilisation mit Ethylenoxid kann als Indikator die Leukobase eines Triphenylmethanfarbstoffes, wie "Michler's Hydrol", und eine saure Komponente vorgesehen sein. In Verbindung mit Ethylenoxid als Sterilisationsgas wird dabei eine irreversible Farbänderung erhalten, die bleiben soll (US-Patentschrift 4 407 960).

Die Erfindung beruht nun auf der Erkenntnis, daß man bei der Zuführung von polaren Lösungsmitteldämpfen eine reversible Farbänderung erhält, und sie besteht in der Verwendung eines optischen Filters, das ein Gemisch aus mindestens einem basischen Triphenylmethanfarbstoff oder -farbbildner und mindestens einer aciden Verbindung enthält, zur Bestimmung und zum Nachweis von Aceton-, Alkohol-, Chloroform- und Ethylacetatdämpfen, wobei eine reversible Farb- und/oder Transparenzänderung des Filters auftritt. Während der Dauer der Einwirkung der Lösungsmitteldämpfe wird an einer oder mehreren Substanzen der chemisch sensitiven Komponente eine reversible Farbreaktion ausgelöst, die photoelektronisch gemessen werden kann. Ein Filter mit dieser Komponente leitet aus der chemischen Zusammensetzung und Konzentration der polaren Lösungsmitteldämpfe ein elektrisches Signal ab, das durch eine Elektronik weiterverarbeitet werden kann.

Das optische Filter, das zur Bestimmung und zum Nachweis von Aceton-, Alkohol-, Chloroform- und Ethylacetatdämpfen dient, enthält ein Gemisch aus mindestens einem basischen Triphenylmethanfarbstoff und mindestens einer aciden Verbindung. Dieses Gemisch kann auf einen optisch transparenten Träger aufgebracht oder auch in eine Matrixsubstanz eingebettet sein, die für die Dämpfe verschiedene Durchlässigkeit und/oder Affinität aufweist. Das Filter zeigt bei Einwirkung des zu messenden Gasanteils, gegebenenfalls gemischt mit Luft, eine dem Partialdruck bzw. der Konzentration analoge Farbänderung.

Die Verwendung eines optischen Filters gemäß der Erfindung gestattet auf einfache Weise das Messen des Partialdruckes bzw. der Konzentration der genannten polaren Lösungsmitteldämpfe bei Raum- oder Umgebungstemperatur. Da das Filter auch in Gegenwart von Trägergas, insbesondere Luft, zuverlässig arbeitet, ist dieses System für die Arbeitsplatzüberwachung und für eine Überwachung im Rahmen des Umweltschutzes einsetzbar. Man erhält dabei eine reversible Farbänderung oder Extinktionsänderung analog dem zu messenden Partialdruck bzw. der Konzentration des einwirkenden Dampfes. Die Nachweisgrenze liegt im Bereich von 10 ppm.

Die sich einstellende Transparenz wird vorzugsweise photoelektrisch ausgelesen, wobei wahlweise eine Kombination einer Photodiode, eines Phototransistors, eines Photowiderstands oder einer Photozelle einerseits mit einer Lumineszenzdiode, einer Glühlampe, einer Entladungslampe oder einer Lichtquelle andererseits nach dem Prinzip der Chemolumineszenz oder der Photolumineszenz zur Anwendung kommt.

Als Triphenylmethanfarbstoff dient insbesondere Kristallviolett. Weitere geeignete Triphenylmethanfarbstoffe sind beispielsweise Phthaleine, insbesondere Phenolphthalein, und Sulfonphthaleine, insbesondere Bromthymolblau. Ein geeigneter Farbbildner des Triphenylmethansystems ist beispielsweise Kristallviolettlacton.

Geeignete acide Verbindungen sind beispielsweise Bisphenol A, Salicylsäure und o-Nitrobenzoesäure.

Als Trägermaterial sind Keramik, Glas und Kunststoffe, wie Polyacrylate, geeignet. Geeignete Matrixsubstanzen, in welche das Gemisch eingebettet werden kann, sind beispielsweise Polyethylen, Polyvinylchlorid, Silicone und Kollodium.

Optische Filter nach der Erfindung können aufgrund der Kompatibilität mit photoelektrisch auslesbaren Elementen vorteilhaft in Bauelementen und Analysegeräten eingesetzt werden.

Zur weiteren Erläuterung der Erfindung wird auf die Zeichnung Bezug genommen. In Figur 1 ist eine Ausführungsform eines Sensors mit einem optischen Filter gemäß der Erfindung schematisch veranschaulicht. Ein Querschnitt einer anderen Ausführungsform eines Sensors ist in Figur 2 dargestellt. Figur 3 zeigt eine weitere Ausführungsform eines Sensors. Dem Diagramm der Figur 4 sind Meßergebnisse zu entnehmen.

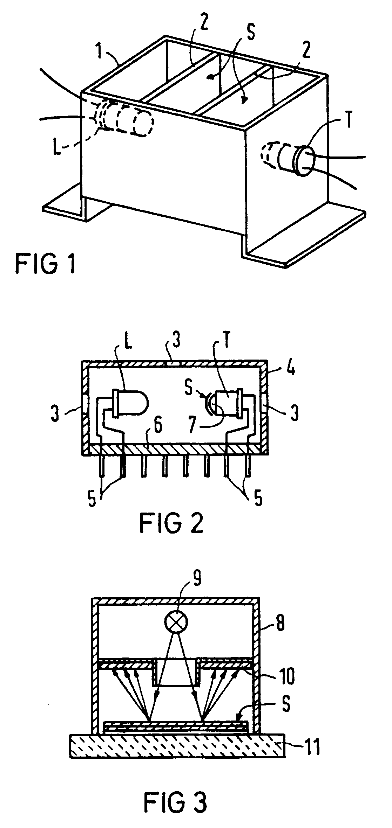

Der in Figur 1 in perspektivischer Ansicht dargestellte Sensor enthält einen an seinen Stirn- und Seitenflächen geschlossenen Rahmen 1, der nach oben und unten offen ist, um einen Gasdurchfluß zu gewährleisten. Auf den einander gegenüberliegenden Stirnflächen des Rahmens 1 sind eine Lumineszenzdiode L und ein Phototransistor T angebracht. Im Strahlengang zwischen L und T befinden sich zwei Scheiben 2 aus Polyester (Hostaphan®) mit aufgebrachten Filtern S.

Figur 2 zeigt im Schnitt ein DIL-Gehäuse 4, das mit mehreren Bohrungen 3 versehen ist, um einen Gasfluß zu ermöglichen. Im Inneren des DIL-Gehäuses 4 sind eine Lumineszenzdiode L und ihr gegenüber ein Phototransistor T angebracht, deren Anschlüsse an verschiedene Steckstifte 5 der Bodenplatte 6 geführt sind. In dieser Ausführungsform ist das Filter S unmittelbar vor der Frontlinse 7 des Phototransistors T angebracht.

Figur 3 zeigt im Schnitt ein zylindrisches Metallgehäuse 8 mit einer Glühlampe 9 als Lichtquelle, die das Filter S beleuchtet. Das zurückgestreute Licht wird von einer ringscheibenförmigen photoempfindlichen Schicht 10 aufgefangen. Das Filter ist auf eine porös-durchlässige Keramikscheibe 11 aufgebracht, die gasdurchlässig ist.

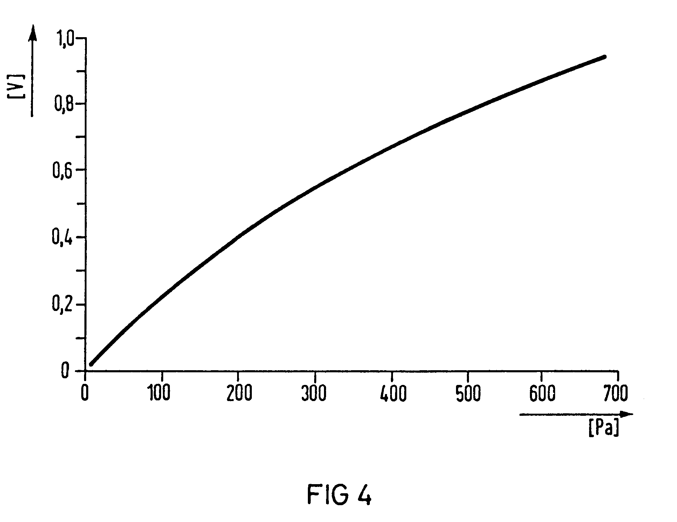

In Figur 4 ist als Ordinate die durch den Photostrom an einem Widerstand hervorgerufene Spannung in Volt (V) und als Abszisse der Ethanoldampfdruck in der Meßanordnung in Pascal (Pa) aufgetragen. Mit zunehmendem Ethanoldampfdruck nimmt der Photostrom zu. Dies ist eine Folge der zunehmenden Transparenz der chemosensitiven Schicht, d.h. des Filters, wobei der Vorgang reversibel ist.

### Beispiel 1

Zum Herstellen des optischen Filters werden beispielsweise 30 mg Kristallviolettlacton, 70 mg Bisphenol A und 100 mg Polyvinylchlorid in 50 ml Tetrahydrofuran gelöst, und die Lösung wird auf eine Polyvinylacetat-Folie aufgesprüht. Das optische Filter S wurde in der Meßanordnung gemäß Figur 1 verschiedenen Ethanoldampfdrücken in Luft ausgesetzt. Die Ethanoldampfdrücke wurden erhalten, indem als Ethanolquelle Ethanol-Wasser-Gemische verschiedener Konzentration dienten. Die unterschiedlichen Dampfdrücke ergaben den aus Figur 4 ersichtlichen Verlauf.

### Beispiel 2

Eine Lösung entsprechend Beispiel 1 wurde direkt auf einen Phototransistor aufgesprüht und dieser in eine Meßanordnung gemäß Figur 2 eingesetzt.

## Patentansprüche

1. Verwendung eines optischen Filters, das ein Gemisch aus mindestens einem basischen Triphenylmethanfarbstoff oder -farbbildner und mindestens einer aciden Verbindung enthält, zur Bestimmung und zum Nachweis von Aceton-, Alkohol-, Chloroform- und Ethylacetatdämpfen, wobei eine reversible Farb- und/oder Transparenzänderung des Filters auftritt.

2. Verwendung eines Filters gemäß Anspruch 1, wobei Kristallviolett als Triphenylmethanfarbstoff dient.

3. Verwendung eines Filters gemäß Anspruch 1 oder 2, wobei Bisphenol-A oder Salicylsäure als acide Verbindung dient.

4. Verwendung eines Filters gemäß einem der Ansprüche 1 bis 3, wobei das Filter aus einer Schicht (5) besteht, die auf einem Träger angeordnet ist.

5. Verwendung eines Filters gemäß einem der Ansprüche 1 bis 3, wobei das Gemisch in eine Matrixsubstanz eingebettet ist.

## Claims

1. Use of an optical filter, which contains a mixture of at least one basic triphenylmethane dye or colour former and at least one acidic compound, for the purpose of determining and detecting acetone, alcohol, chloroform and ethyl acetate vapours, wherein a reversible colour change and/or transparency change of the filter occurs.

2. Use of a filter according to claim 1, wherein crystal violet is used as a triphenylmethane dye.

3. Use of a filter according to claim 1 or 2, wherein bisphenol-A or salicylic acid is used as an acidic compound.

4. Use of a filter according to one of the claims 1 to 3, wherein the filter consists of a layer (S) which is arranged on a carrier.

5. Use of a filter according to one of the claims 1 to 3, wherein the mixture is embedded in a matrix substance.

## Revendications

1. Utilisation d'un filtre optique, qui contient un mélange d'au moins un colorant basique a base de triphénylméthane ou un agent de coloration basique à base de triphénylméthane et d'au moins un composé acide, pour une détermination et une indication de la présence de vapeurs d'acétone, d'alcool, de chloroforme et d'acétate d'éthyle, où il se produit une modification réversible de couleur et/ou de transparence du filtre.

2. Utilisation d'un filtre selon la revendication 1, où du violet cristallisé sert de colorant à base de triphénylméthane.

3. Utilisation d'un filtre selon la revendication 1 ou 2 où du bisphénol - A ou bien de l'acide salicylique sert de composé acide.

4. Utilisation d'un filtre selon une des revendications 1 à 3, où le filtre comporte une couche (5), qui est disposée sur un support.

5. Utilisation d'un filtre selon une des revendications 1 à 3, où le mélange est incorporé dans une substance formant une matrice.
